# EUROPÄISCHE PATENTSCHRIFT

(11) **EP 2 664 242 B1**
(45) Veröffentlichungstag und Bekanntmachung des Hinweises auf die Patenterteilung: **25.03.2015**
(21) Anmeldenummer: 13166467.4
(22) Anmeldetag: 03.05.2013
(51) Int. Cl.: A23G 4/08, C08L 31/04

(54) **Kaugummigrundmasse, daraus hergestellte Kaugummizubereitung und Verfahren zu ihrer Herstellung**
Gum base, chewing gum preparation produced therefrom and methods for production thereof
Masse de base pour gomme à mâcher, préparation de gomme à mâcher fabriquée à partir de cette masse et son procédé de fabrication

(30) Priorität: 15.05.2012 DE 102012208131
(43) Veröffentlichungstag der Anmeldung: 20.11.2013
(73) Patentinhaber: Wacker Chemie AG, 81737 München (DE)
(72) Erfinder: Wimmer, Thomas, 84489 Burghausen (DE); Dauth, Jochen, 81825 München (DE)
(74) Vertreter: Potten, Holger

(56) Entgegenhaltungen:
- EP-A2- 2 570 033
- WO-A1-2008/119674
- US-A1- 2007 042 079

## Beschreibung

Die Erfindung betrifft eine Kaugummigrundmasse, eine daraus hergestellte Kaugummizubereitung sowie Verfahren zu ihrer Herstellung.

Kaugummizubereitungen bestehen üblicherweise aus einem wasserunlöslichen Teil, der sog. Kaugummigrundmasse auch Gumbase genannt, und einem wasserlöslichem Teil (Zucker oder Polyole/Zuckeralkohole), der in geringer Menge Geschmacksstoffe, Süßungsmittel und gegebenenfalls Farbstoffe oder Antioxidantien enthält.

Typischerweise enthalten Gumbaseformulierungen Elastomere (wie z.B. Polyisobutylen, Butylrubber, Styrol-Butadien-Kautschuk (SBR) oder Naturkautschuk), Polyvinylacetat, gegebenenfalls Vinylacetat-Vinyllaurat-Copolymere, Polyterpene oder Ester der Kolophoniumharze, Füllstoffe, Fette (teilweise gehärtete Pflanzenfette) oder Wachse (Paraffinwachse, mikrokristalline Wachse) sowie Emulgatoren.

Aus US 4876095 und US 5110607 sind Kaugummigrundmassen bekannt, die Elastomere wie SBR, Polyisobutylen oder Butylrubber, aber keine Kolophoniumharze und Polyterpene enthalten.

In US 5173317 werden Polyvinylacetat-freie Kaugummigrundmassen beschrieben, die Vinylacetat-Vinyllaurat-Copolymere als überwiegend eingesetzte Elastomere enthalten. Diese Massen enthalten ferner Kolophoniumharzderivate oder Polyterpene.

US 5116626 beschreibt eine transparente Kaugummigrundmasse / Kaugummizubereitung bestehend nahezu ausschließlich aus Polyvinylacetat, Polyisobutylen, Vinyllaurat-Vinylacetat-Copolymeren und einem Weichmacher.

In US2011/0293777 sind Formulierungen offenbart, die Vinyllaurat-Vinylacetat-Copolymere, Polyvinylacetat, Kolophoniumharzderivate, Füllstoffe, Weichmacher und Emulgatoren enthalten.

In DE 102011082981 ist eine Kaugummigrundmasse und basierend auf dieser Grundmasse eine Kaugummizubereitung beschrieben, die weniger klebrig ist, als bekannte Kaugummigrundmassen / Kaugummizubereitungen. Diese Kaugummigrundmasse ist eine homogene Zusammensetzung bestehend aus Polyvinylacetat in einer Menge von 25 - 90 Gew.-%, Vinyllaurat-Vinylacetat-Copolymer in einer Menge von 5 - 70 Gew.-%, sowie einem Weichmacher in einer Menge von 1% - 15 Gew.-% jeweils bezogen auf das Gesamtgewicht der Zusammensetzung.

Aufgabe der vorliegenden Erfindung ist es eine Kaugummigrundmasse bereitzustellen, die einen im Vergleich zu bekannten Kaugummigrundmassen verbesserten Geruch, Geschmack und verbesserte Oxidationsbeständigkeit aufweist, nur eine geringe Klebrigkeit besitzt, und zudem einfach zu verarbeiten ist.

Die Aufgabe wird gelöst durch eine homogene Zusammensetzung bestehend aus 15 - 45 Gew.-% Polyvinylacetat, 10-30 Gew.-% Vinyllaurat-Vinylacetat-Copolymeren, 15-45 Gew.-% Füllstoffen, 5-30 Gew.-% Wachsen oder Fetten, 1-10 Gew.-% Weichmacher und 1-10 Gew.-% Emulgatoren.

Vorzugsweise besteht die homogene Zusammensetzung zu 20-35 Gew.-% aus Polyvinylacetat (PVAc) und zu 12-25 Gew.-% aus Vinyllaurat-Vinylacetat-Copolymer (VL/VA-Copolymer). Füllstoffe sind vorzugsweise in einer Menge von 20-30 Gew.-% vorhanden, Wachse oder Fette vorzugsweise in einer Menge von 10-20 Gew.-%, Weichmacher bevorzugt in einer Menge von 2-8 Gew.-% und Emulgatoren vorzugsweise in einer Menge von 2-8 Gew.-%.

Alle Gew.-% Angaben sind bezogen auf das Gesamtgewicht der jeweiligen Zusammensetzung. Die in Gew.-% benannten Einsatzmengen der Bestandteile einer Rezeptur addieren sich jeweils auf 100 Gew.-%.

Die erfindungsgemäße homogene Zusammensetzung enthält keine Elastomere, keine Kolophoniumharzderivate und keine Polyterpene. Sie vermeidet so die mit diesen Komponenten verbundenen Nachteile.

Elastomere unter denen im Sinne der Erfindung Styrol-Butadien-Kautschuk, Polyisobutylen, Butylrubber, natürliche Kautschuke, wie z.B. Chicle ( meist auf Basis von cis- oder trans-1,4 Polyisoprenen) zu verstehen sind, haben den Nachteil, dass die Handhabung und die Verarbeitung aufwendig ist. Um eine homogene Gumbase zu erhalten, müssen die (zumeist nicht schmelzbaren) Elastomere in aufwendigen, zeitintensiven Prozessen unter hohen Scherkräften mit den übrigen Zutaten einer Gumbase dispergiert werden.

Nachteil der üblicherweise verwendeten Polyterpene oder Kolophoniumharz-Derivate ist deren unangenehmer Geschmack und Geruch. Zudem sind diese Produkte instabil bezüglich Oxidation, was zu einer verminderten Haltbarkeit der Produkte selbst und der daraus hergestellten Formulierungen führt.

Alle Komponenten der erfindungsgemäßen Zusammensetzung bis auf den Füllstoff schmelzen bei Verarbeitungstemperatur und lassen sich daher leichter mischen und verarbeiten als bekannte Kaugummigrundmassen.

Bevorzugt werden Polyvinylacetate mit einem gewichtsmittleren Molekulargewicht Mw von 10.000 bis 60.000, besonders bevorzugt 15.000 bis 50,000. Das gewichtsmittlere Molekulargewicht Mw wurde bestimmt mittels Size Exclusion Chromatography (SEC) gegen Polystyrol-Standard, in THF, bei 40°C, Flow Rate 1,2 ml/min. Es können auch Gemische von Polyvinylacetaten mit unterschiedlichem Molekulargewicht eingesetzt werden.

Das Vinyllaurat-Vinylacetat-Copolymerisat besitzt vorzugsweise ein gewichtsmittleres Molekulargewicht Mw von 50.000 bis 600.000, besonders bevorzugt 100.000.bis 400.000. Das Vinyllaurat-Vinylacetat-Copolymerisat enthält vorzugsweise 15 bis 60 Gew.-%, Vinyllaurat-Einheiten und 40 bis 85 Gew.-% Vinylacetat-Einheiten, besonders bevorzugt 35-45 Gew.-% Vinyllaurat-Einheiten und 55 bis 65 Gew.-% Vinylacetat-Einheiten. Es können auch mehrere Vinyllaurat-Vinylacetat-Copolymere mit unterschiedlicher Copolymerisat-Zusammensetzung und/oder unterschiedlichem Molekulargewicht eingesetzt werden.

Die in der erfindungsgemäßen Kaugummigrundmasse verwendeten Füllstoffe sind vorzugsweise ausgewählt aus der Gruppe Calciumcarbonat, Magnesiumcarbonat, Talkum und Dicalciumphosphat. Bevorzugt sind Calciumcarbonat oder Talkum.

Als Wachse kommen vorzugsweise zum Einsatz Paraffinwachse, mikrokristalline Wachse, Polyethylenwachse oder natürliche Wachse wie Bienenwachs oder Carnaubawachs. Als Fette kommen in Betracht tierische Fette wie z.B. Talg und Schmalz, sowie pflanzliche Fette, z.B. Kakaobutter, Soyabohnenöl, Baumwollsamenöl, die auch gehärtet sein können. Besonders bevorzugt werden mikrokristalline Wachse und gehärtete Pflanzenfette. Unter mikrokristallinen Wachsen sind vorzugsweise bei 20°C feste Kohlenwasserstoffe zu verstehen, die im Vergleich zu Paraffinwachsen einen höheren Anteil an verzweigten Alkanen enthalten.

Der Weichmacher ist vorzugsweise ausgewählt aus der Gruppe Diacetin und Triacetin. Besonders bevorzugt ist Triacetin.

Die in der erfindungsgemäßen Kaugummigrundmasse verwendeten Emulgatoren sind vorzugsweise ausgewählt aus der Gruppe Monoglyceride, Diglyceride, Acetem, Glycerinmonostearat, Lecithin. Besonders bevorzugt sind Acetem und Glycerinmonostearat. Es können auch Mischungen mehrerer Emulgatoren eingesetzt werden.

Die erfindungsgemäße homogene Zusammensetzung eignet sich bevorzugt als Kaugummigrundmasse, die Erfindung betrifft daher auch die Verwendung einer erfindungsgemäßen Zusammensetzung als Kaugummigrundmasse. Die erfindungsgemäße Kaugummigrundmasse sowie daraus hergestellte Kaugummizubereitungen weisen eine verbesserte Freisetzung von Geschmacksstoffen auf, als bekannte Kaugummigrundmassen / Kaugummizubereitungen.

Die erfindungsgemäße Kaugummigrundmasse kann durch ein für derartige Massen übliches Verfahren, in aller Regel ein Knetverfahren hergestellt werden. Die Herstellung kann kontinuierlich z.B. in einem Extruder oder diskontinuierlich z.B. in einem Doppel-Z-Kneter erfolgen. Sie erfolgt vorzugsweise bei einer Temperatur von 80 - 130°C, bevorzugt 90 - 120°C über einen Zeitraum von 30 bis 100 Minuten.

Dazu geeignete Polyvinylacetate und geeignete Vinyllaurat-Vinylacetat-Copolymerisate sind im Handel erhältlich, beispielsweise die VINNAPAS^{®}-Festharze der Wacker Chemie AG. Die Polyvinylacetat-Komponente und die Vinyllaurat-Vinylacetat-Copolymerisat-Komponente können in bekannter Weise mittels Masse- oder Lösungspolymerisation hergestellt werden. Ein geeignetes Verfahren ist beispielsweise in der EP 1352914 B1 beschrieben. Dazu werden die entsprechenden Monomere in Gegenwart von Initiatoren wie Peroxid- oder Azo-Initiatoren, gegebenenfalls in einem meist alkoholischen Lösungsmittel und gegebenenfalls in Gegenwart von Reglern, bei einer Temperatur von im Allgemeinen 40°C bis 140°C polymerisiert, und gegebenenfalls Lösungsmittel und Regler sowie Restmonomer abdestilliert.

Bei der Herstellung der erfindungsgemäßen Kaugummigrundmasse werden vorzugsweise Polyvinylacetat und Vinyllaurate-Vinylacetat-Copolymere zu Beginn vermischt und die übrigen Zutaten anschließend zugegeben.

Die Herstellung eines erfindungsgemäßen Kaugummis aus der Kaugummigrundmasse erfolgt üblicherweise bei ca. 60 °C unter Zugabe von Zucker, Syrup, Geschmacksstoffen und gegebenenfalls Farbstoffen, Fruchtsäuren, Süßstoffen, Feuchthaltemitteln. Zuckerfreier Kaugummi wird analog aus Kaugummigrundmasse, Polyolen (Zuckeralkohol, auch als Bulk-Süßungsmittel bezeichnet), Geschmacksstoffen und gegebenenfalls Farbstoffen, Fruchtsäuren, Süßstoffen, Feuchthaltemitteln hergestellt. Die Zugabe erfolgt in derartigen Mengen, das die im Folgenden genannte Zusammensetzung erhalten wird.

Die erfindungsgemäße Kaugummigrundmasse wird, gegebenenfalls auf 40-60°C erwärmt und mit den anderen Kaugummizutaten bei 45-65 °C zu einem Teig gemischt. Dies kann beispielsweise in einem beheizbaren Doppel-Z-Kneter oder in einem Extruder erfolgen. Anschließend wird die Kaugummimasse durch übliche Verfahren geformt. Zur Formung dienen dem Fachmann bekannte, kontinuierliche Verfahren wie Extrusion, Co-Extrusion, Walzen oder Schneiden. Als mögliche Formen kommen Streifen, Slabs, Pellets, Bänder oder Hohlkugeln in Betracht.

Der so erhaltene erfindungsgemäße Kaugummi enthält die erfindungsgemäße Zusammensetzung sowie Zucker oder Syrup, Geschmacksstoffe und gegebenenfalls Farbstoffe, Fruchtsäuren, Süßstoffe, Feuchthaltemittel oder Polyole, Geschmacksstoffe, Süßstoffe und gegebenenfalls Farbstoffe, Fruchtsäuren und Feuchthaltemittel.

Er besteht vorzugsweise aus 13 - 35 Gew.-% erfindungsgemäßer Kaugummigrundmasse, 62 -85 Gew.-% aus einem oder mehreren Polyolen sowie 1 - 3 Gew.-% üblichen Geschmacksstoffen, und gegebenenfalls bis zu 3% Feuchthaltemittel (z.B. Glycerin), optional Fruchtsäuren (z.B. Zitronensäure, Äpfelsäure, Weinsäure) bis zu 1,5 Gew.-%, und optional Süßstoffe (Acesulfam, Aspartam, Aspartam-Acesulfam-Salz, Cyclamat, Saccharin, Sucralose, Thaumatin, Neohesperidin, Neotam, Stevioside) bis zu 0,5 Gew.-%.

Bei den Polyolen handelt es sich vorzugsweise um Sorbitol, Mannitol, Maltitol, Isomalt, Xylitol, Eryhthritol oder eine Mischung dieser Verbindungen. Sie Polyole liegen vorzugsweise in fester Form oder als Syrup mit einem Festgehalt größer 50 Gew.-% vor.

Die folgenden Beispiele dienen der weiteren Erläuterung der Erfindung:

### Beispiel 1: Herstellung einer Kaugummigrundmasse

In einem beheizbaren Doppel-Z-Kneter wurden 320 g homopolymeres PVAc (käuflich erhältlich bei der Wacker Chemie AG unter der Bezeichnung VINNAPAS B 1.5 sp; Mw 15.000) bei 120 °C zusammen mit 200 g Vinylacetat-Vinyllaurat-Copolymer (Monomer-Verhältnis-Gewicht: 60:40; (käuflich erhältlich bei der Wacker Chemie AG unter der Bezeichnung VINNAPAS B 500/40 VL) aufgeschmolzen und mit 80 g Triacetin vermischt.

Anschließend werden bei 100°C 200 g Talkum, 130 g mikrokristallines Wachs (Fa. Paramelt), 20 g Pflanzenfett, 25 g Glycerinmonostearat und 25 g Acetem (Fa. Danisco) zugegeben. Nach einer Gesamtmischzeit von 40 Minuten wird die Gumbase aus dem Kneter entnommen und auf Raumtemperatur abgekühlt.

### Beispiel 2: Herstellung einer Kaugummigrundmasse

In einem beheizbaren Doppel-Z-Kneter wurden 230 g homopolymeres PVAc (käuflich erhältlich bei der Wacker Chemie AG unter der Bezeichnung VINNAPAS B 5 sp; Mw 25.000) bei 120 °C zusammen mit 145 g Vinylacetat-Vinyllaurat-Copolymer (Monomer-Verhältnis-Gewicht: 60:40; (käuflich erhältlich bei der Wacker Chemie AG unter der Bezeichnung VINNAPAS B 500/40 VL) aufgeschmolzen und mit 55 g Triacetin vermischt.

Anschließend werden bei 100°C 420g Talkum, 100 g mikrokristallines Wachs (Fa. Paramelt), 10 g Pflanzenfett, 15 g Glycerinmonostearat und 25 g Acetem (Fa. Danisco) zugegeben. Nach einer Gesamtmischzeit von 45 Minuten wird die Gumbase aus dem Kneter entnommen und auf Raumtemperatur abgekühlt.

### Beispiel 3: Herstellung einer Kaugummigrundmasse

In einem beheizbaren Doppel-Z-Kneter wurden 320 g homopolymeres PVAc (käuflich erhältlich bei der Wacker Chemie AG unter der Bezeichnung VINNAPAS B 1.5 sp; Mw 15.000) bei 120 °C zusammen mit 200 g Vinylacetat-Vinyllaurat-Copolymer (Monomer-Verhältnis-Gewicht: 80:20; (käuflich erhältlich bei der Wacker Chemie AG unter der Bezeichnung VINNAPAS B 500/20 VL) aufgeschmolzen und mit 80 g Triacetin vermischt.

Anschließend werden bei 100°C 200 g Talkum, 100 g mikrokristallines Wachs (Fa. Paramelt), 30 g Pflanzenfett, 30 g Glycerinmonostearat und 40 g Acetem (Fa. Danisco) zugegeben. Nach einer Gesamtmischzeit von 40 Minuten wird die Gumbase aus dem Kneter entnommen und auf Raumtemperatur abgekühlt.

### Beispiel 4: Herstellung einer Kaugummigrundmasse

In einem beheizbaren Doppel-Z-Kneter wurden 280 g homopolymeres PVAc (käuflich erhältlich bei der Wacker Chemie AG unter der Bezeichnung VINNAPAS B 1.5 sp; Mw 15.000) bei 120 °C zusammen mit 120 g Vinylacetat-Vinyllaurat-Copolymer (Monomer-Verhältnis-Gewicht: 80:20; (käuflich erhältlich bei der Wacker Chemie AG unter der Bezeichnung VINNAPAS B 500/20 VL) aufgeschmolzen und mit 120 g Vinylacetat-Vinyllaurat-Copolymer (Monomer-Verhältnis-Gewicht: 60:40; (käuflich erhältlich bei der Wacker Chemie AG unter der Bezeichnung VINNAPAS B 500/40 VL) vermischt. Nach dem Verkneten werden 50 g Triacetin zugegeben. Anschließend werden bei 90°C 230 g Talkum, 100 g mikrokristallines Wachs (Fa. Paramelt), 30 g Pflanzenfett, 30 g Glycerinmonostearat und 40 g Acetem (Fa. Danisco) zugegeben. Nach einer Gesamtmischzeit von 40 Minuten wird die Gumbase aus dem Kneter entnommen und auf Raumtemperatur abgekühlt.

### Beispiel 5: Herstellung einer Kaugummigrundmasse

In einem beheizbaren Doppel-Z-Kneter wurden 330 g homopolymeres PVAc (käuflich erhältlich bei der Wacker Chemie AG unter der Bezeichnung VINNAPAS B 30 sp; Mw 50.000) bei 130 °C zusammen mit 240 g Vinylacetat-Vinyllaurat-Copolymer (Monomer-Verhältnis-Gewicht: 60:40; mittleres Molekulargewicht von 100.000 gemessen mit SEC) aufgeschmolzen und mit 40 g Triacetin vermischt.

Anschließend werden bei 95°C 220 g Calciumcarbonat, 70 g mikrokristallines Wachs (Fa. Paramelt), 60 g Pflanzenfett, 20 g Glycerinmonostearat und 20 g Acetem (Fa. Danisco) zugegeben. Nach einer Gesamtmischzeit von 50 Minuten wird die Gumbase aus dem Kneter entnommen und auf Raumtemperatur abgekühlt.

### Beispiel 6: Herstellung eines zuckerfreien Kaugummis

In einem beheizbaren Doppel-Z-Kneter wurde bei 60 - 80°C aus den Zutaten in Tab. 1 eine Kaugummimasse hergestellt. In einem Labor-Walz-Schneidgerät wurden daraus Kaugummistreifen der Dimension 19 mm x 74 mm hergestellt.

**Tab. 1:**

| | |
|---|---|
| Kaugummigrundmasse aus Beispiel 1 | 320 g |
| Sorbitol | 435 g |
| Lycasin (Maltitol Syrup) | 63 g |
| Xylitol | 160 g |
| Aspartam | 2 g |
| Pfefferminzöl | 15 g |
| Glyzerin | 5 g |

### Beispiel 7: Herstellung eines zuckerhaltigen Kaugummis

In einem beheizbaren Doppel-Z-Kneter wurde bei 60 - 80°C aus den Zutaten in Tab. 1 eine Kaugummimasse hergestellt. In einem Labor-Walz-Schneidgerät wurden daraus Kaugummistreifen der Dimension 19 mm x 74 mm hergestellt.

**Tab. 2:**

| | |
|---|---|
| Kaugummigrundmasse aus Beispiel 3 | 200 g |
| Glucosesyrup 45° | 160 g |
| Zucker | 461 g |
| Glyzerin | 160 g |
| Aspartam | 1 g |
| Orangenöl | 10 g |
| Zitronensäure | 8 g |

## Patentansprüche

1. Homogene Zusammensetzung bestehend aus 15 - 45 Gew.-% Polyvinylacetat, 10-30 Gew.-% Vinyllaurat-Vinylacetat-Copolymeren, 15-45 Gew.-% Füllstoffen, 5-30 Gew.-% Wachsen oder Fetten, 1-10 Gew.-% Weichmachern, 1-10 Gew.-% Emulgatoren.

2. Homogene Zusammensetzung gemäß Anspruch 1, **dadurch** gekennzeichnet, dass sie zu 20 - 35 Gew.-%, aus Polyvinylacetat, zu 12-25 Gew.-% aus Vinyllaurat-Vinylacetat-Copolymer, 20-30 Gew.-% aus Füllstoffen, 10-20 Gew.-% aus Wachsen oder Fetten, zu 2-8 Gew.-% aus Weichmachern und zu 2-8 Gew.-% aus Emulgatoren besteht.

3. Homogene Zusammensetzung gemäß Anspruch 1 oder 2, **dadurch** gekennzeichnet, dass das Polyvinylacetat ein gewichtsmittleres Molekulargewicht Mw von 10.000 bis 60.000 besitzt und das Vinylacetat-Vinyllaurat-Copolymerisats ein gewichtsmittleres Molekulargewicht Mw von 50.000 bis 600.000 besitzt.

4. Homogene Zusammensetzung gemäß Anspruch 1, 2 oder 3, **dadurch gekennzeichnet, dass** die Füllstoffe ausgewählt sind aus der Gruppe Calciumcarbonat, Magnesiumcarbonat, Talkum und Dicalciumphosphat und/oder die Wachse ausgewählt sind aus der Gruppe Paraffinwachse, mikrokristalline Wachse, Polyethylenwachse oder natürliche Wachse und/oder die Fette ausgewählt sind aus der Gruppe tierische Fette und pflanzliche Fette, der Weichmacher ausgewählt ist aus der Gruppe Diacetin, Triacetin,und die Emulgatoren ausgewählt sind aus der Gruppe Acetem und Glycerinmonostearat.

5. Verfahren zur Herstellung einer homogenen Zusammensetzung gemäß einem der Ansprüche 1 bis 4, durch ein Zusammengeben der Komponenten Polyvinylacetat, Vinylacetat-Vinyllaurat-Copolymerisat, Füllstoff, Wachs oder Fett, Weichmacher und Emulgator in einem diskontinuierlichen oder einem kontinuierlichen Verfahren bei einer Temperatur von 80 - 130°C, bevorzugt 90 - 120°C über einen Zeitraum von 30 bis 100 Minuten.

6. Kaugummi enthaltend eine Zusammensetzung gemäß Anspruch 1 bis 4 sowie Zucker oder Syrup, Geschmacksstoffe und gegebenenfalls Farbstoffe, Fruchtsäuren, Süßstoffe, Feuchthaltemittel oder Polyole, Geschmacksstoffe, Süßstoffe und gegebenenfalls Farbstoffe, Fruchtsäuren, Feuchthaltemittel.

7. Kaugummi nach Anspruch 6, **dadurch gekennzeichnet, dass** er zu
13 - 35 Gew.-% aus einer Zusammensetzung gemäß Anspruch 1 bis 4,
62 - 85 Gew.-% aus einem oder mehreren Polyolen
1 - 3 Gew.-% aus Geschmacksstoffen,
gegebenenfalls bis zu 3 Gew.-% aus Feuchthaltemittel und
gegebenenfalls bis zu 1,5 Gew.-% aus Fruchtsäuren besteht und
gegebenenfalls bis zu 0,5 Gew.-% aus Süßstoffen besteht.

8. Verfahren zur Herstellung eines Kaugummis gemäß Anspruch 6 oder 7, **dadurch gekennzeichnet, dass** bei ca. 60°C eine homogene Zusammensetzung gemäß Anspruch 1 bis 4 mit
Polyolen oder Zucker und Syrup
und Geschmacksstoffen
und ggf. Farbstoffen, Fruchtsäuren, Süßstoffen und Feuchthaltemitteln gemischt werden.

9. Verwendung einer Zusammensetzung gemäß Anspruch 1 bis 4 als Kaugummigrundmasse.

## Claims

1. Homogeneous composition consisting of 15-45% by weight of polyvinyl acetate, 10-30% by weight of vinyl laurate-vinyl acetate copolymers, 15-45% by weight of fillers, 5-30% by weight of waxes or fats, 1-10% by weight of plasticizers, 1-10% by weight of emulsifiers.

2. Homogeneous composition according to Claim 1, **characterized in that** it consists of 20-35% by weight of polyvinyl acetate, of 12-25% by weight of vinyl laurate-vinyl acetate copolymer, 20-30% by weight of fillers, 10-20% by weight of waxes or fats, of 2-8% by weight of plasticizers, and of 2-8% by weight of emulsifiers.

3. Homogeneous composition according to Claim 1 or 2, **characterized in that** the polyvinyl acetate has a weight-average molecular weight Mw from 10 000 to 60 000, and the vinyl acetate-vinyl laurate copolymer has a weight-average molecular weight Mw from 50 000 to 600 000.

4. Homogeneous composition according to Claim 1, 2 or 3, **characterized in that** the fillers are selected from the group calcium carbonate, magnesium carbonate, talcum and dicalcium phosphate and/or the waxes are selected from the group paraffin waxes, microcrystalline waxes, polyethylene waxes or natural waxes and/or the fats are selected from the group animal fats and vegetable fats, the plasticizer is selected from the group diacetin, triacetin, and the emulsifiers are selected from the group acetem and glycerol monostearate.

5. Method for producing a homogeneous composition according to any one of Claims 1 to 4 by mixing together the components polyvinyl acetate, vinyl acetate-vinyl laurate copolymer, filler, wax or fat, plasticizer and emulsifier in a discontinuous or continuous method at a temperature of 80-130°C, preferably 90-120°C, over a time period of 30 to 100 minutes.

6. Chewing gum containing a composition according to Claims 1 to 4 and also sugar or syrup, flavorings and optionally dyes, fruit acids, sweeteners, moisture-retention agents, or polyols, flavorings, sweeteners and optionally dyes, fruit acids, moisture-retention agents.

7. Chewing gum according to Claim 6, **characterized in that** it consists of 13-35% by weight of a composition according to Claims 1 to 4,
62-85% by weight of one or more polyols
1-3% by weight of flavorings,
optionally up to 3% by weight of moisture-retention agents and
optionally up to 1.5% by weight of fruit acids and
optionally up to 0.5% by weight of sweeteners.

8. Method for producing a chewing gum according to Claim 6 or 7, **characterized in that**, at approximately 60°C, a homogeneous composition according to Claims 1 to 4 is mixed with polyols or sugar and syrup
and flavorings
and optionally dyes, fruit acids, sweeteners and moisture-retention agents.

9. Use of a composition according to Claims 1 to 4 as gum base.

## Revendications

1. Composition homogène constituée par 15-45% en poids de poly(acétate de vinyle), 10-30% en poids de copolymères de laurate de vinyle-acétate de vinyle, 15-45% en poids de charges, 5-30% en poids de cires ou de graisses, 1-10% en poids de plastifiants, 1-10% en poids d'émulsifiants.

2. Composition homogène selon la revendication 1, **caractérisée en ce qu'**elle est constituée, à raison de 20-35% en poids, de poly(acétate de vinyle), à raison de 12-25% en poids, de copolymère de laurate de vinyle-acétate de vinyle, à raison de 20-30% en poids, de charges, à raison de 10-20% en poids, de cires ou de graisses, à raison de 2-8% en poids, de plastifiants et, à raison de 2-8% en poids, d'émulsifiants.

3. Composition homogène selon la revendication 1 ou 2, **caractérisée en ce que** le poly (acétate de vinyle) présente un poids moléculaire pondéral moyen M_{w} de 10 000 à 60 000 et le copolymère d'acétate de vinyle-laurate de vinyle présente un poids moléculaire pondéral moyen M_{w} de 50 000 à 600 000.

4. Composition homogène selon la revendication 1, 2 ou 3, **caractérisée en ce que** les charges sont choisies dans le groupe formé par le carbonate de calcium, le carbonate de magnésium, le talc et le phosphate dicalcique et/ou les cires sont choisies dans le groupe formé par les cires de paraffine, les cires microcristallines, les cires de polyéthylène ou les cires naturelles et/ou les graisses sont choisies dans le groupe des graisses animales et des graisses végétales, le plastifiant est choisi dans le groupe formé par la diacétine, la triacétine et les émulsifiants sont choisis dans le groupe formé par l'Acetem et le monostéarate de glycérol.

5. Procédé pour la préparation d'une composition homogène selon l'une quelconque des revendications 1 à 4, par réunion des composants poly(acétate de vinyle), copolymère d'acétate de vinyle-laurate de vinyle, charge, cire ou graisse, plastifiant et émulsifiant dans un procédé discontinu ou continu à une température de 80-130°C, de préférence de 90-120°C sur un laps de temps de 30 à 100 minutes.

6. Gomme à mâcher contenant une composition selon les revendications 1 à 4 ainsi que soit du sucre ou du sirop, des agents gustatifs et le cas échéant des colorants, des acides de fruits, des édulcorants, des humectants, soit des polyols, des agents gustatifs, des édulcorants et le cas échéant des colorants, des acides de fruits, des humectants.

7. Gomme à mâcher selon la revendication 6, **caractérisée en ce qu'**elle est constituée,
à raison de 13-35% en poids, d'une composition selon les revendications 1 à 4,
à raison de 62-85% en poids, d'un ou de plusieurs polyols
à raison de 1-3% en poids, d'agents gustatifs,
le cas échéant, jusqu'à 3% en poids, d'humectants et
le cas échéant, jusqu'à 1,5% en poids, d'acides de fruits et le cas échéant, jusqu'à 0,5% en poids, d'édulcorants.

8. Procédé pour la préparation d'une gomme à mâcher selon la revendication 6 ou 7, **caractérisé en ce qu'**on mélange, à environ 60°C, une composition homogène selon les revendications 1 à 4, avec
des polyols ou du sucre et du sirop
et des agents gustatifs
et le cas échéant des colorants, des acides de fruits, des édulcorants et des humectants.

9. Utilisation d'une composition selon les revendications 1 à 4 comme masse de base pour gomme à mâcher.
